Europäisches Patentamt

European Patent Office

Office européen des brevets

(19)

(11) Publication number: **0 382 390**

**A2**

(12) **EUROPEAN PATENT APPLICATION**

(21) Application number: 90300955.3

(22) Date of filing: 30.01.90

(51) Int. Cl.⁵: **G06F 11/10, G06F 13/42**

(30) Priority: 03.02.89 US 306836

(43) Date of publication of application:
16.08.90 Bulletin 90/33

(84) Designated Contracting States:
AT BE CH DE DK ES FR GB GR IT LI LU NL SE

(71) Applicant: **DIGITAL EQUIPMENT CORPORATION**
111 Powdermill Road
Maynard Massachusetts 01754-1418(US)

(72) Inventor: **Gagliardo, Michael A.**
32 Pal Drive
Shrewsbury, Massachusetts 01545(US)
Inventor: **Tessari, James E.**
222 Mistic Valley Parkway
Arlington, Massachusetts 01752(US)
Inventor: **Collins, Hansel A.**
901C Ridgefield Circle
Clinton, Massachusetts 01510(US)
Inventor: **Lynch, John**
46 Bent Avenue
Wayland, Massachusetts 01778(US)
Inventor: **Chinnaswamy, Kumar**
12C Country Club Lane
Milford, Massachusetts 01757(US)

(74) Representative: **Hale, Peter et al**
Kilburn & Strode 30 John Street
London WC1N 2DD(GB)

(54) **Method and means for error checking of dram-control signals between system modules.**

(57) For the detection of errors in DRAM-control signals transmitted across an interconnect between system modules, a comparison of the parity of the control signals as transmitted and as received is performed at the transmitter module. The transmitter module is provided with a parity generator for determining the parity of the control signals being transmitted. The receiver module is provided with a similar parity generator for determining the parity of the control signals as received from the interconnect. The receiver module generates a parity signal indicating the parity determined by the parity generator in the receiver module, and transmits the parity signal over the interconnect to the transmitter module. At the transmitter module, the parity indicated by the parity signal is compared with the parity determined by the parity generator in the transmitter module for generating an error signal when the parity indicated by the parity signal is unequal to the parity determined by the parity generator in the transmitter module. Preferably one of the DRAM-control signals is used as a time reference for determining the point at which the parity signal from the receiver module is compared to the parity determined for previously transmitted control signals. A delay of a predetermined period of time is provided between the time that the control signals are transmitted from the transmitter module and the point at which the comparison of parity signals is performed: this predefined delay is based upon the time required for signals to traverse, in both directions, the path through the interconnection between the transmitter module and the receiver module, as well as the clock skews inherent in the modules.

FIG. 1

# METHOD AND MEANS FOR ERROR CHECKING OF DRAM-CONTROL SIGNALS BETWEEN SYSTEM MODULES

This invention relates generally to computer systems in which control signals for the operation of DRAM-based units of system memory are relayed between system modules. More particularly, this invention relates to an improved method of error detection for DRAM-control signals that is adapted for operation at higher system speeds and requires reduced logic and signal lines.

High performance computers are generally based upon the concept of multi-processing wherein a plurality of processors are used to work on a defined task through appropriate problem decomposition. In such systems, interconnections between mass storage and other system devices are provided through multiple input/output (I/O) buses in order to achieve high speed and extensive connectivity and redundancy; Multi-processing systems typically use a system control unit (SCU) for coordinating the parallel operation of the plurality of central processing units (CPUs) comprising the multi-processing system in conjunction with the main system memory, I/O devices, and other components of the computing system. In a system of this type, each of the system units is ported into the SCU which links all ports together in a manner analogous to the functions traditionally provided by system buses and regulates inter-unit communication for efficient exchange of data and related control signals. The SCU keeps all system components active by avoiding inter-unit conflicts and essentially functions to process requests for communications between the system memory and the system units linked through the various ports on the SCU.

The ability of each of the system units, particularly the CPUs, to independently access memory is critical to realizing efficient parallel and pipelined operation, and one of the main functions of the SCU is to manage memory access in a manner which most efficiently allows the system units to function in parallel. The SCU use some form of interconnection network for establishing the various data paths that are required to process simultaneous data transactions between the various units of the multi-processing system. In addition, the efficient management of memory access is handled through an appropriate SCU-main memory interface which regulates parallel access for each of the system CPUs to the various modules comprising the main memory of the system.

An important aspect of the operation of the SCU is in assuring integrity of data transferred to and from the typically DRAM-based modules comprising the system memory. It is particularly important that the control signals that are relayed between appropriate modules on the SCU and the memory module be error free for ensuring efficient loading and unloading of data to and from the DRAMs. In conventional systems, error checking of DRAM control signals which are relayed across an interconnect or interface linking the module transmitting the control signals and the module receiving the control signal (typically the memory module) is handled by transmitting a parity signal along with the control signals. At the memory module end, parity is generated for the received controls signals and checked against the received parity to detect any error resulting from the transfer. Such a system necessarily requires at least two extra signal lines to handle the parity signal and the parity error signal. More importantly, this type of conventional error checking is dependant on the use of a clock system at the receiver end which corresponds to the system clock provided at the transmitter end; the provision of the clock is needed for synchronizing the parity signals received along with the control signals to the receiver-generated parity signal in order to ensure that the parity check produces a meaningful result.

Such error checking schemes can become problematic in high performance multi-processing systems, particularly those of the modular kind which use a basic configuration comprising a plurality of CPUs, I/O units, and main memory units (MMUs), and which are capable of being upgraded by integrating additional identically configured system units into the computing system. In such modular systems, signal lines to and from the module memory unit are at a premium, and it can become difficult, if not impractical, to provide signal lines dedicated to the transmission of parity and parity error signals. In addition, it may be impractical to provide a separate clock system on the memory units for the propose of synchronizing the control signals with the associated parity signals received at the memory units. Accordingly, conventional error checking schemes are inadequate at providing efficient error detection of DRAM control signals in such non-bussed computer systems.

According to the present invention there is provided an error checking method for detecting errors in data transmitted between a transmitter and a receiver, the method comprising:

generating a parity signal for the data at the transmitter;

transmitting the data from the transmitter to the receiver;

generating a parity signal for the received data at the receiver module;

transmitting the receiver-generated parity signal from the receiver to the transmitter; and

comparing, at the transmitter, the receiver generated parity signal with the transmitter-generated parity signal to generate an error signal when the parity signals are found to be unequal.

To provide an efficient scheme for the detection of errors in DRAM-control signals relayed across an interconnect between system modules of a multi-processing system, a comparison of the parity of the control signals as transmitted and as received is performed at the transmitter module. The transmitter module is provided with a parity generator for determining the parity of the control signals being transmitted. The associated receiver module is provided with a similar parity generator for determining the parity of the control signals as received from the interconnect. The receiver module generates a parity signal indicating the parity determined by the parity generator in the receiver module, and transmits the parity signal over the interconnect to the transmitter module. At the transmitter module, the parity indicated by the parity signal is compared with the parity determined by the parity generator in the transmitter module for generating an error signal when the parity indicated by the parity signal is unequal to the parity determined by the parity generator in the transmitter module. The invention also extends to a data transmission system comprising transmitter means, receiver means, and a data link connecting the transmitter means and the receiver means for the transmission of data between the transmitter means and the receiver means, the transmitter means including means for transmitting the data over the data link to the receiver means and a parity generator for determining the parity of data transmitted by the transmitter means to the receiver means, and the receiver means including means for receiving data from the data link and a parity generator for determining the parity of the data received from the data link, characterised in that

the receiver means include means for transmitting a parity signal to the transmitter means, the parity signal indicating the parity determined by the parity generator included in the receiver means, and

the transmitter means include means for receiving the parity signal transmitted by the receiver means, and means for comparing the parity indicated by the parity signal to the parity determined by the parity generator in the transmitter means and indicating an error when the parity indicated by the parity signal is not the same as the parity determined by the parity generator in the transmitter means.

According to a preferred embodiment, one of the DRAM control signals, the column address strobe (CAS) signal, is used as a time reference for determining the point at which the parity signals returned from the control receiver means are compared with the parity signal generated at the control transmitter end. A predefined period of delay is provided between the time that the control signals are relayed out of the transmitter module and the point at which the comparison of parity signals is performed: this predefined delay is based upon the time required for signals to traverse in both directions, the path through the interconnection between the transmitter module and the receiver module and the clock skews inherent to the system modules.

Also according to a preferred embodiment, the error checking scheme is adapted to a multi-processing system in which communication between the SCU and the main memory system occurs through a dedicated interface comprising an array control unit (ACU) and a main memory unit (MMU) comprising a set of memory modules comprising part of the main memory of the system. In such a system, the ACU includes a main memory control (MMC) module which comprises means for providing control signals for the data path, the address path, and the DRAMs included in the memory modules. The ACU also includes a memory DRAM controller (MCD) which contains control logic for operation of DRAMs located in the main memory. Each MMU comprises a plurality of memory modules (MMs) and contains all DRAMs associated with a single memory sub-system logically spread across the MMs so that a single data path is supported between the MMU and the SCU. Each memory module is provided with a DRAM control and address (DCA) module which is adapted to accept control signals from the DRAM controller, translate the signals to appropriate logic levels, and relay the control signals to the banks of DRAMS located in the memory module.

In a system of this type, the error checking scheme of the present invention is utilized by adapting the MCD module as a transmitter module containing the control transmitter means and adapting the DCA module as the receiver module containing the control receiver means. The control transmitter and the control receiver means are provided with means for building a bit-mask corresponding to the CAS signal in response to a CAS mask control signal and a write select in signal received from the MMC module. The CAS mask signal is used to identify selected long-words (4-byte words) from the 64-byte data block which are typically addressed in such a system, that need to be written to. The CAS mask signal so generated is processed in combination with the DRAM-control signals by parity generation means at the control transmitter end. Subsequently, the DRAM-control signals are relayed to the control receiver and parity generation is performed at the receiver end upon these signals in conjunction with the CAS mask signal. The receiver-generated parity is then transferred back to the transmitter for comparison with the transmitter-generated parity to determine the presence of errors.

The parity comparison at the transmitter end is performed at a specific point in time within the DRAM cycle relative to a change in state in the CAS signal. More specifically the sampling is performed after a predefined delay period pursuant to the CAS signal having transitioned; the delay is predetermined to account for the transition time involved in relaying the DRAM-control signals across the interconnect linking the transmitter and receiver modules and relaying the parity signal back to the transmitter module, as well as the clock skews inherent thereto.

It will become apparent that the present error checking scheme requires only one additional signal line for performing the parity checking at the transmitter end as compared to the two or more signal lines that are required in conventional parity schemes. More significantly, the parity generation and detection logic required at the control receiver is substantially simplified because of the lack of a need for a system clock synchronized to the clock at the transmitter end and because the receiver parity signal is relayed immediately upon generation to the transmitter end without any need for a latching arrangement for storing the signal.

FIG. 1 is a simplified block diagram of a multi-processing system comprising a plurality of SCU controlled system units in which the error checking scheme of this invention may be advantageously used;

FIG. 2 is a block diagrammatic illustration of the memory sub-system that serves as the communication link between the SCU and the system memory according to this invention;

FIG. 2A is a block diagram of a preferred memory organization showing interleaving of memory segments on block boundaries;

FIG. 3 is breakdown of the modular composition of the array control unit (ACU) which provides the interfacing action between the SCU and system memory;

FIG. 4A is a block diagram illustrating a main memory control (MMC) module that is used within the ACU module;

FIG. 4B is a block diagram illustrating a memory control DRAM (MCD) module that is used within the ACU module;

FIG. 4C is a block diagram illustrating a memory data path (MDP) module that is used within the ACU module;

FIG. 5 is a schematic diagram illustrating the modular composition of a main memory unit (MMU) for use with the ACU of FIGS. 3 and 4 in providing the interface between the SCU and memory;

FIG. 6A is a block diagram of a DRAM data path (DDP) module of the kind used in memory modules of the main memory unit (MMU);

FIG. 6B is a block diagram of a DRAM control and address (DCA) module used in the memory modules of the main memory unit (MMU);

FIG. 7 is a block diagram illustrating in detail the modular composition of the MCD module in the ACU of FIGS. 3 and 4;

FIG. 8 is an illustration of the modular configuration for the DDP module shown in FIG. 6A;

FIG. 9 is a schematic diagram illustrating the control signal path inside a DCA module for use in the memory module of FIG. 5;

FIG. 10 is a simplified diagram illustrating a conventional arrangement for error checking by parity checking at the receiver end;

FIGS. 11 and 12 are block diagrams respectively illustrating preferred implementations of transmitter and receiver modules in an arrangement for implementing the error checking scheme of this invention for DRAM-control signals relayed between a transmitter module and a receiver module;

FIG. 13 is a diagram illustrating the preferred logic implementation for the CAS mask generators shown in FIGS. 11 and 12;

FIG. 14 is a diagram showing a preferred logic implementation for the parity generator means of FIG. 10;

FIGS. 15 and 15A are diagrams showing a preferred logic implementation for the error check module of FIG. 10;

FIG. 16 is an illustration of a preferred arrangement for combining the DRAM-control signals with the CAS mask bits before relaying the signals to the DRAMs; and

FIG. 17 is a timing diagram illustrating the relative transitions of the DRAM-control signals.

While the invention is susceptible to various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents, and alternatives falling within the scope of the invention as defined by the appended claims.

Description of the Preferred Embodiments

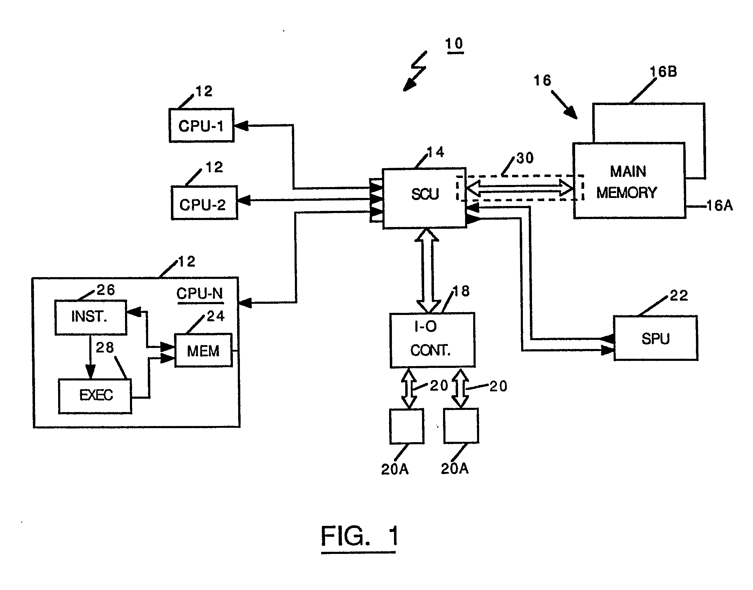

Referring to the drawings, FIGS. 1-9 pertain to.

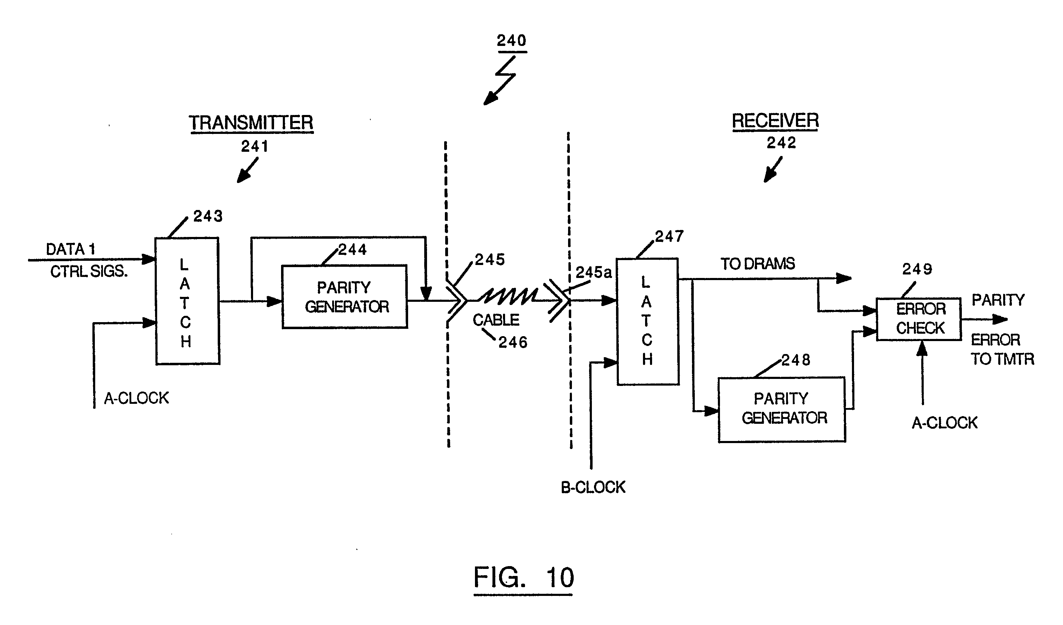

a preferred multi-processing system where the error checking scheme of the present invention may be used to advantage. Such a system, wherein an SCU is used to regulate the parallel access to . memory and the interaction of various system units including CPUs, I/Os, and a service processor unit (SPU), is described with reference to FIGS. 1-9 along with the associated description for the reader's convenience. Details specific to the error checking scheme and its implementation will be described below with reference to FIGS. 10-16 . It will, however, be understood that the application of the error checking scheme to the multi-processing system described in the aforementioned co-pending application is merely for illustrative purposes only and is not intended to restrict the scope of this invention in any way.

Referring in particular to FIG. 1, there is shown a simplified block diagram of a multiprocessing system 10 which uses a plurality of central processing units (CPUs) 12 and is configured to permit simultaneous, i.e., parallel operation, of the system CPUs by allowing them to share a common main memory 16 for the system. The main memory 16 itself typically comprises a plurality of memory modules or units 16A and 16B. A system control unit (SCU) 14 links the CPUs 12 to the main memory 16 and to the input output (I/O) controller 18 which allows the processing system in general and the CPUs in particular to communicate with the external world through appropriate I/0 interfaces 20 and associated I/O units 20A for the system. The SCU 14 also links the various system modules to a service processor/console unit (SPU) 22 which performs traditional console functions including status determination and the control of the overall operation of the processing system. In particular, the SCU 14 provides the SPU 22 with means for communicating with the plurality of CPUs 12 and provides access to all storage elements in the CPUs.

Efficient communication between all system units ported into the SCU 14 and the main memory 16, and more particularly between each of the CPUs 12 and the main memory 16, is critical for insuring efficient parallel operation of the processing system. This operation is provided by means of a dedicated interface means 30 linking the SCU 14 and the main memory 16. The interface 30 provides the SCU 14 with means for interfacing and controlling the various modules comprising the main memory 16 in response to memory interaction commands or signals received from each of the CPUs 12 or I/O units 20A that are ported into the SCU.

Although the interface means 30 is not restricted to any particular CPU architecture, it should be noted that each CPU 12 typically includes a memory module 24 which provides the CPU interface to memory, I/O and other CPU units. In particular, the memory module serves as means for accepting memory references, usually virtual, translating the references to physical addresses, and initiating accesses to memory data, either in main memory through the SCU 14 and the interface means 30 or within a local cache. Each CPU 12 also includes an instruction module 26 for fetching instructions, decoding operation codes (opcodes) and specifiers, fetching operands, and updating the system program counter. In addition, each CPU has an execution module 28 which serves as the execution stage for decoded instructions and fetched operands provided by the other CPU modules.

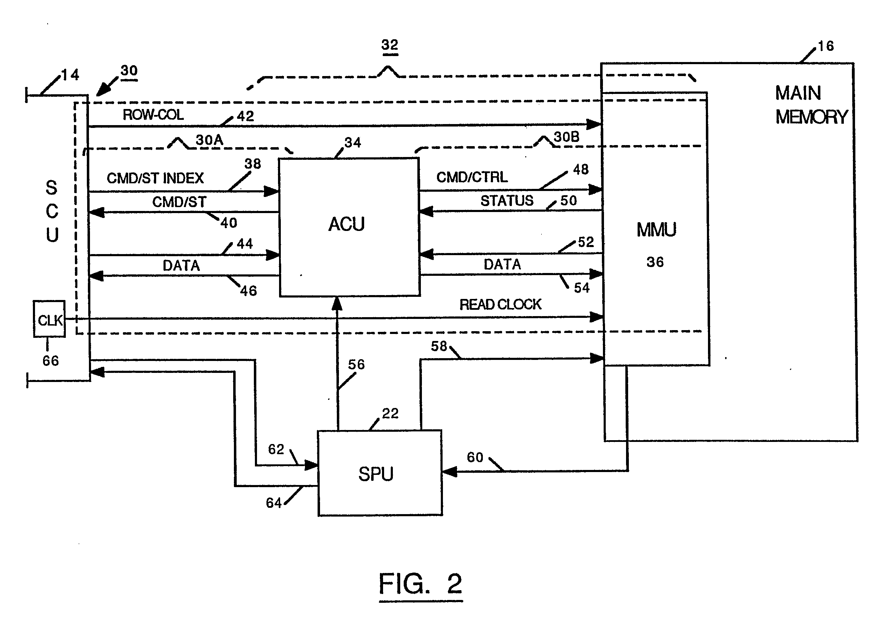

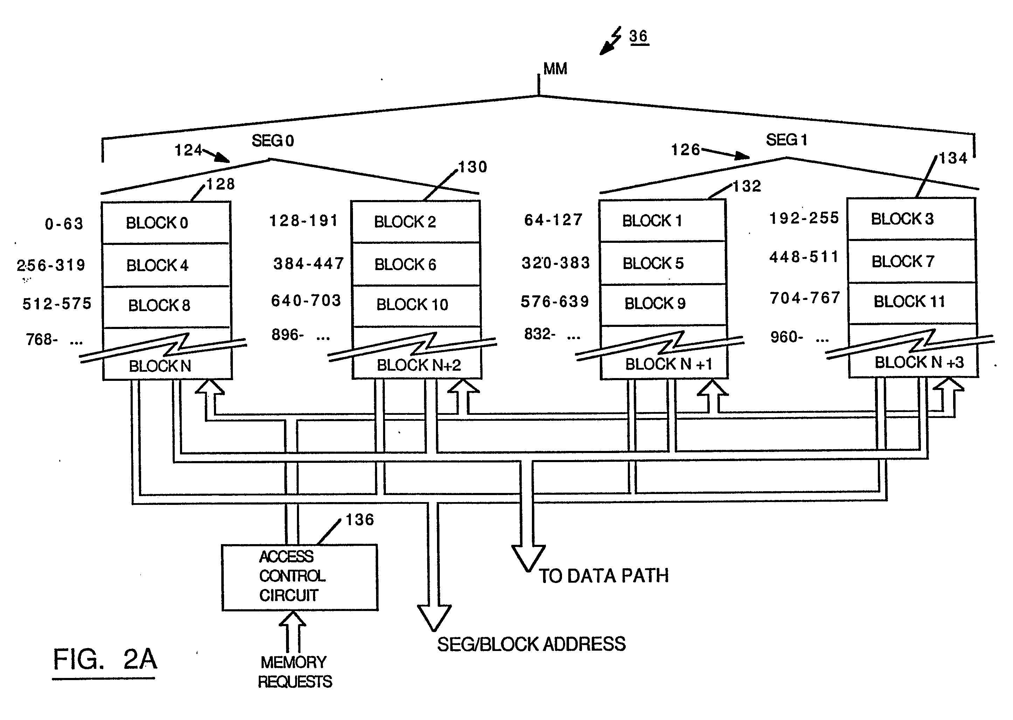

Referring now to FIG. 2, there is shown a preferred embodiment of dedicated interface means 30 linking the SCU 14 to the main memory 16. The interface means 30 is provided in the form of a memory subsystem 32 essentially comprising an array control unit (ACU) 34 which accepts command signals and data transfer requests from the SCU and a main memory unit (MMU) 36 functioning as the storage section of main memory 16 to which the SCU 14 is interfaced. The ACU 34 includes all the control logic for providing the interfacing action and is preferably located physically on the SCU module itself.

The interfacing of the SCU 14 to the main memory 16, is provided by means of the ACU 34 through a bi-sectional interface comprising i) the ACU 34 and the links between the SCU 14 and the ACU 34 (collectively designated as 30A) and ii) the link between the ACU 34 and a MMU 36 of main memory 16 (collectively designated as 30B). The SCU 14 is interfaced to a main memory which has a non-bussed, high-bandwidth, and block-oriented configuration. All CPU accesses to or from memory are made through the ACU 34 in block increments comprising a selected number of bytes (typically 64 bytes). Data storage in the main memory is provided through the use of extended hex-size modules, each preferably providing 64 megabits (M-bit) of storage using a one M-bit DRAM. Four such memory modules are grouped together to form a single MMU 36 and the main memory 16 includes at least one such MMU.

The ACU 34 provides the interface and control for the memory modules included within the MMU 36 and includes means for accepting a command/status/index signal over control line 38 from the SCU 14 indicative of the particular memory operation that is required, such as, read-from-memory, write-to-memory, etc. This signal also indicates the status of buffers within the logic portion of the SCU designated for receiving commands back from the ACU.

A direct address path is provided between the SCU 14 and the corresponding MMU 36 so that the row/column address designating a particular segment of memory being addressed by a memory command can be transferred directly from the SCU 14 to the corresponding MMU 36 under control of the ACU 34. The command signal relayed from the SCU on line 38 includes an index which is used by the ACU as a basis for initiating direct transfer, from the SCU, of designated ones of the stored addresses referencing desired rows or columns within addressed memory segments in the MMU 36. The ACU accepts the index accompanying a memory command over the command/status signal line and relays the index back if and when the particular memory segment being referenced by the command is available to be accessed.

The use of the index also permits the ACU to control multiplexed signals relayed over the address lines from the SCU 14 to the MMU 36. The index relayed back to the SCU 14 identifies the stored row/column address which corresponds to a particular available segment of memory within the MMU. Receipt of the relayed index from the ACU initiates the transfer of the corresponding row/column address stored in the SCU over line 42 directly to the MMU. More specifically, the index represents a predefined bit field in the command information transferred from the SCU to the ACU, which identifies one of the plurality of address registers provided within the SCU for storing row/column addresses associated with memory commands prioritized for execution by the SCU. The index preferably has a 4-bit field so that it is capable of identifying one of up to 16 address registers.

Row/column addresses are transmitted in a multiplexed manner over the direct address path from the SCU to the MMU. Along with the index, the ACU also relays back to the SCU a signal, preferably in the form of a single bit added to the index field, which serves as a row/column select signal indicative of whether a row or column is being addressed in a memory segment by the address directly transmitted from the selected SCU address register to memory. The ACU also relays back with the index a signal, preferably a single bit signal, indicative of the particular one of the row and column addresses stored in the SCU address registers. The multiplexing of row addresses with column addresses is performed on the basis of the row/column select signal generated by the ACU by means of a standard multiplexing arrangement (not shown) provided within the SCU. For the case where the SCU is provided with 12 address storage registers, the row/column select signal can·be used to index up to 12 addresses, thereby making it possible to support addressability of up to 16M-bits of memory.

The ACU 34 is also linked to the SCU 14 through a communication line 40 through which a command/status signal is relayed to the SCU for providing an indication of availability and status of data requested from memory by the SCU. Data communication lines 44 and 46 serve as means for transfer of data between the SCU and the ACU. It should be noted that the ACU 34 does not serve as a means for storing data for subsequent transfer to or from the SCU; instead, the ACU merely functions as a means for relaying data on-the-fly from addressed portions of memory modules within the MMU to the SCU or vice versa.

On the memory end of the memory subsystem 32, the ACU is linked to the MMU 36 by means of communication line 48 for transfer of control/command signals from the ACU indicative of the particular memory operation desired by the SCU. Communication line 50 serves as a means for transfer of the status of requested data from the MMU to the ACU. Data communication lines 52, 54 are provided as means a for transfer of data between the ACU and the MMU. The ACU 34 is also linked to the SPU 22 through a control line 56. This link serves as a means for adapting the ACU, and hence the interfacing action provided by it, to the various timing modes between which the main memory may be switched. The SPU 22 is linked to the main memory via control line 58 and status line 60 in order to initialize the memory and switch the memory between three different timing modes: (1) a normal mode for supporting regular system operation; (2) a step mode to support single-step operation on the basis of system clocks; and (3) a stand-by mode for retaining system integrity during power failure and scan operation. The switching action is performed by the SPU 22 in responses to the transfer of appropriate signals from the SCU 14 via control lines 62 and 64. The communication link provided by line 56 between the ACU and the SPU permits the operation of the SCU-ACU interface for the SCU to be consistent with the memory mode in operation at a given time.

Clocking action for operating the interface in order to access memory is conveniently provided through clock means 66 provided on the SCU. The clock means 66 is preferably a programmable clock capable of generating a plurality of time-staggered clock signals having preselected clock periods. Such clocks are conventional and available in the form of I.C.s typically generating up to eight clock signals with different time periods. Different ones of the clock signals may be selected to control memory access on·the basis of the clock period best suited for optimal data transfer timing as well as the mode under which the system is operating at a given time.

Each MMU 36 of the main memory 16 is connected to a memory port on the SCU through the ACU with each MMU having two segments which are interleaved on block boundaries. The SCU can then be used to cycle two memory segments in parallel through use of a single memory subsystem. The use of an additional memory system (i.e., an added ACU/MMU pair) allows the system to be upgraded to allow parallel operation of four memory systems, thereby permitting up to four memory references to be operated upon in a parallel fashion; in such a case, the ACU allows the SCU 14 to accept a memory request from any of the CPUs and to pass it on to the designated segment in memory. The interleaving of segments is based on matching the memory access block size to the size of the cache blocks used in the system CPUs.

A segment-based organization for each MMC forming the main memory is illustrated at FIG. 2A. As shown therein, the data storage section of each MMU comprises a pair of segments 124, 126 each of which comprises a pair of memory banks. The four memory banks are respectively designated as 128, 130, 132, and 134. The memory banks are DRAM-based and may each store, for example, up to 64 Megabytes of data. Although the general organization of such a segment-based memory is conventional, it is important that the memory addresses for the memory banks be interleaved on block boundaries. Such an arrangement is illustrated at FIG. 2A wherein interleaving is shown for a preferred data block size of 64 bytes. A first block (BLOCK 0) has byte addresses 0-63 associated with it and is stored in the first bank 128 of the first memory segment 124; the next consecutive block comprising byte addresses 64-127, i.e., the second block (BLOCK 1), is stored in the first memory bank 132 of the second memory segment 126; the third block (BLOCK 2) having byte addresses 128-191 associated with it is stored in the second memory bank 130 of the first memory segment 124; the fourth memory block (BLOCK 3) has byte addresses 192-225 associated with it and is stored in the second memory block 134 of the second memory segment 126; the fifth block (BLOCK 4) has byte addresses of 256-319 associated with it and is stored in the first memory bank 128 of the first memory segment 124; and so on.

In addition, the main memory 36 comprised of the plurality of memory modules is provided with an access control circuit 136 which permits independent and simultaneous access to a plurality of the memory banks for obtaining blocks of data spread over different ranges of byte addresses. The choice of the data block size on which interleaving of memory segments is based is matched to the size of the cache blocks used in the various CPU's comprising the multi-processor system to maintain a correspondence between data blocks requested by a CPU and the corresponding interleaved data blocks available from the segments of each MMU.

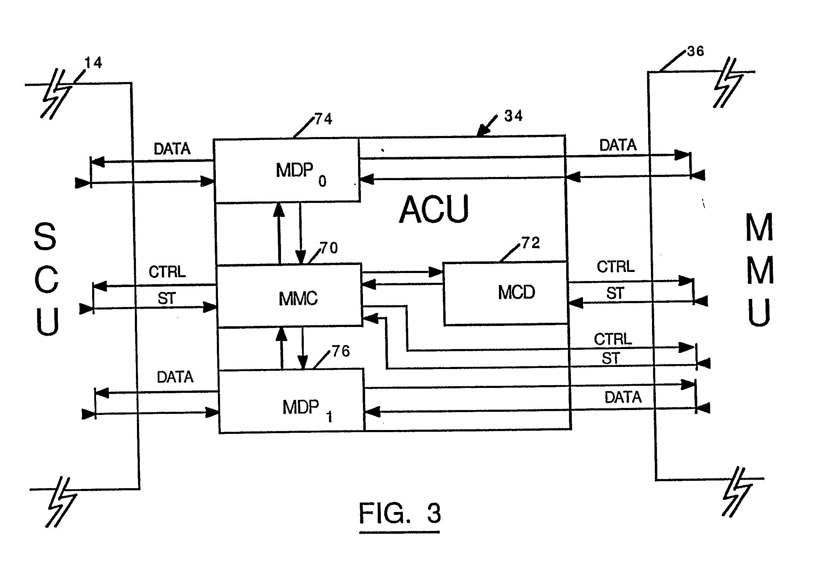

Turning now to FIG. 3, there is presented a block diagram of the physical breakdown of components within the ACU. The ACU logic is implemented in macro-cell arrays and essentially provides the data path and control for the memory system. The ACU includes a main memory control (MMC) module 70 which in combination with the memory control DRAM (MCD) module 72 provides control for the data path and the memory modules. For providing this control operation, the MMC 70 and MCD 72 are linked to each other for exchange of command signals and to the MMU 36 through control/status lines. The MMC 70 is in direct communication with SCU 14 by virtue of similar control/status lines.

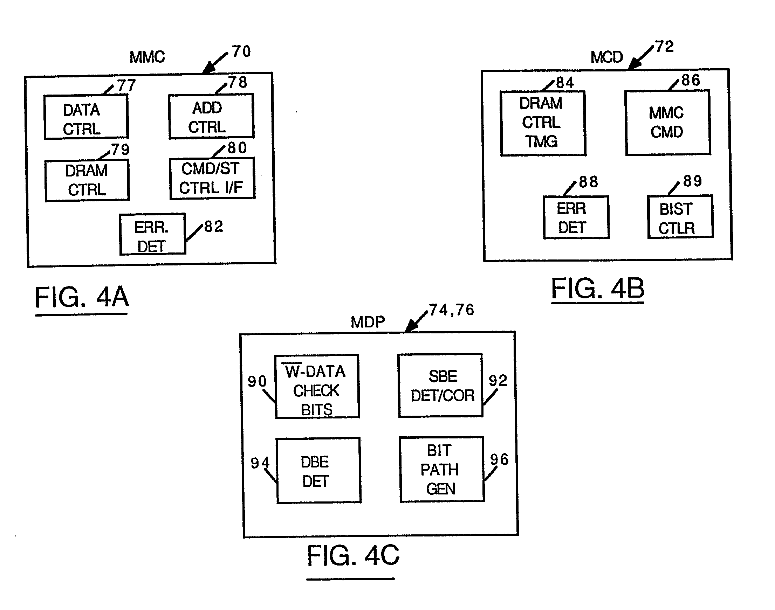

Referring to FIG. 4A, the MMC 70 is a gate array module including means 77 for generation of control signals for the data path, means 78 for generation of control signals for the address path, means 79 for generation of DRAM control commands to the MCD (72 in FIG. 3), means 80 for provision of the command, control and status interface to the logic portion of the SCU, and means 82 for provision of error detection for all control lines of the MMC.

The MCD 72 is a gate array which includes controller means for the DRAMs included therein and for self-test functions. More particularly, as seen in FIG. 4B, the MCD 72 includes means 84 for generation of control timing for the DRAMs, means 86 for generation of commands to the MMC during normal operation, and to the MMU when the system is under step-mode operation, means 88 for provision of error detection on control lines for the MCD, and controller means 89 for regulating self-test operation, as will be described in detail below.

The data path section of the ACU 34 is divided between two memory data path modules (MDP's) 74 and 76 (see FIG. 3). The MDP modules are linked to the MMC 70 for accepting and acknowledging command signals and are ported into both the SCU 14 and the MMU 36 through appropriate data lines for transfer of data between the SCU and memory. Moreover, each MDP provides data transfer over an independent or alternative path.

As shown in FIG. 4C, each MDP 74, 76 includes means 90 for provision of check bit generation for write data, means 92 for detection and correction of single bit errors (SBE) on read data, means 94 for detection of double bit errors (DBE) on read data, and means 96 for provision of byte merge paths for received data.

It is clear from the foregoing that the system memory is interfaced to the control logic in the SCU at three distinct junctions:

1) all command and status information is handled through the MMC module provided on the ACU;

2) all data transfers are handled through the pair of MDP modules, also provided on the ACU and ported into the SCU; and

3) information representing row and column addresses is relayed by the SCU to the corresponding MM segment upon initiation by the ACU.

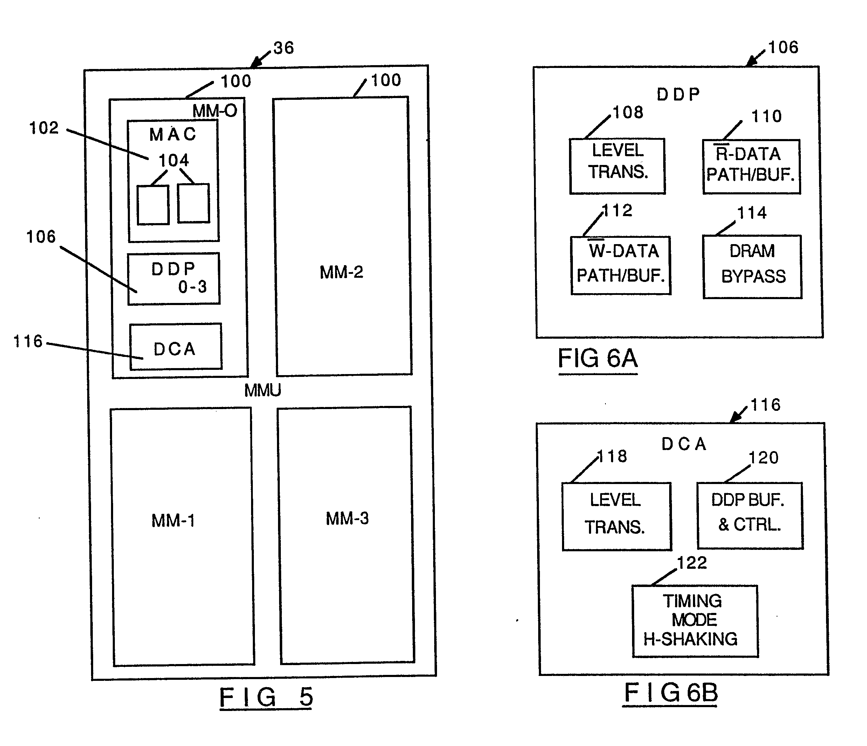

Turning now to FIG. 5, there is shown a schematic diagram of the modular composition of the main memory unit (MMU) 36 which forms part of the system main memory to which the SCU is interfaced. As noted above, each MMU is preferably comprised of four memory modules (MMs) 100 providing four memory banks (128, 130, 132 and 134 in FIG. 2A). It should be understood that while the ACU 34 serves as the primary means through which the SCU interacts with the system memory through a particular MMU, the operation of the ACU is not restricted to a specific configuration of the MMU. In terms of storage allocation, the MMU is preferably divided into two memory segments, each having two banks as described above. The MMU contains all DRAMs associated with a single memory subsystem and the DRAMs are logically spread across the four MMs 100 so that a single data path is supported between the MMU and the ACU. The two segments of the MMU thus share a common data path even though the segments are operated independently. The two banks comprising each MMU segment are controlled by the ACU so that only one bank may be active for a given memory command. This is accomplished by making the address lines to the segments different while retaining common data lines. More specifically, the write enable and column address select signals are common to both segments while the status (asserted or negated) of the row address select signals is different and determines which of the two segments is rendered active.

According to a preferred logic implementation, each memory module (MM) is made up of a main array card (MAC) module 102 with added storage capacity being provided by a pair of "daughter array card" (DAC) modules 104 capable of being plugged into the MAC. Each MAC is an extended hex module that contains surface mounted DRAMs and other necessary logic. In particular, the MAC includes means for providing the following functions in addition to the storage capacity provided by the DRAMs: (1) provision of write data buffering; (2) provision of read data buffering; (3) insuring integrity of DRAM data during power failure; (4) provision of connections and logic support for the two DAC; and (5) control of memory cycles during step-mode operation.

Each memory module 102 has four DRAM data path (DDP) modules 106 located on it. As seen in FIG. 6A, each DDP has provided on it means 108 for handling level translation between the logic levels (ECL to TTL and vice versa) used in the module, means 110 for provision of the read data path and related buffering, means 112 for provision of the write data path and related buffering, and means 114 for provision of a DRAM by-pass path when required.

Each memory module 100 also has a DRAM control and address (DCA) module 116 which, as seen in FIG. 6B, includes means 118 for providing level translation means 120 for providing buffering and control signals to the DDP modules 110 and including commands designated memory commands which will be discussed in detail below, and means 122 for execution of handshake sequences when switching between different system timing modes under control of the SPU (22 in FIG. 2).

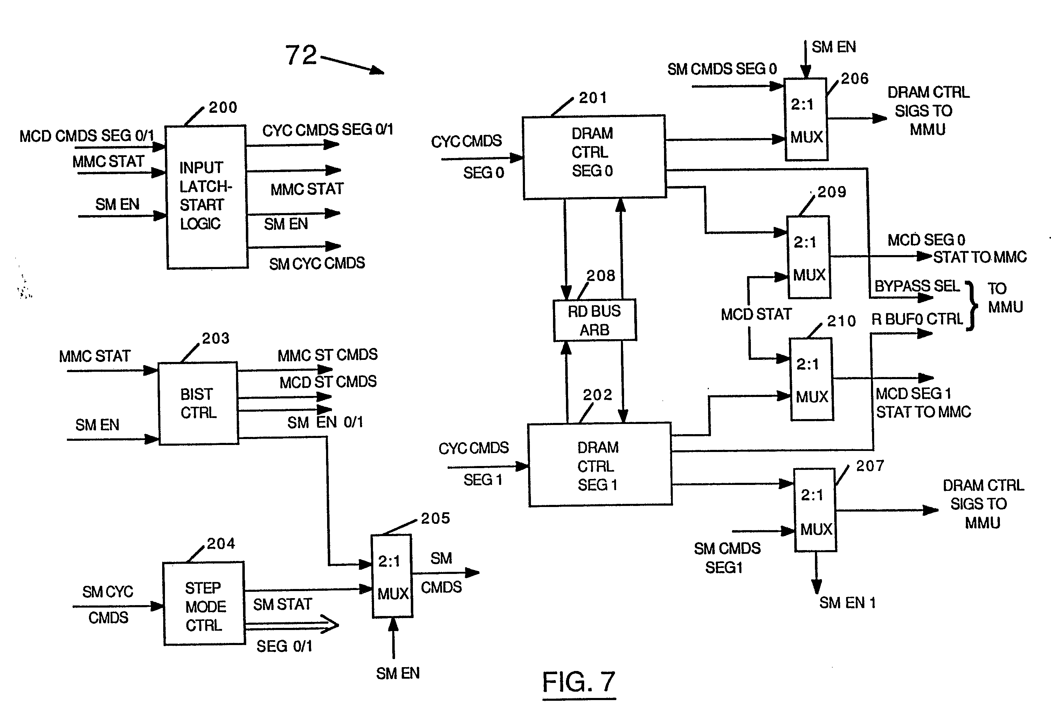

Referring now to FIG. 7, there is shown a detailed diagrammatic representation of the modular composition of a MCD module 72 suitable for use in the ACU (34 in FIG. 2). The MCD includes an input latch/start logic module 200 for accepting control and status commands from the MMC module 70. The signals fed to the input latch 200 include commands directed to the two segments (segment 0 and segment 1) controlled by the MCD module, the MMC status signal, and a step mode (SM) enable signal indicating to the MCD module that a particular memory operation is to be performed under the step mode of operation. In response to the control signals input to it, the input latch/start logic module 200 generates a corresponding set of control signals including the command signals for initiating the cycling of address DRAMs.

More specifically, a cycle command signal for segment 0 is generated and provided to a DRAM controller 201 for segment 0; a corresponding cycle command signal for segment 1 is provided to a second DRAM controller 202 for segment 1. Upon receiving the cycle command, the DRAM controllers generate the DRAM control signals, including the row address select (RAS) signal, the column address select (CAS) signal, and the write enable (WE) signal, for use in controlling the action of the DRAMs located within addressed segments in the MMU.

The MCD module 72 also includes a built-in self-test (BIST) controller 203 for generating control and status signals when the memory sub-system is being cycled through a self-test mode for testing the operational integrity of the various modules comprising the sub-system. More specifically, the BIST controller 203 accepts the MMC status signal and the step mode enable signal in order to generate corresponding self-test command and status signals along with specific step mode enable signals for segments 0 and 1. The BIST controller also generates SM commands, including RAS, CAS, and WE signals, for use in controlling DRAM operation within the MMU in the self-test mode.

A step mode controller 204 is provided within the MCD 72 for accepting the SM cycle commands put out by the input latch/start logic 200 and generating corresponding SM commands, which are similar to the commands put out by the BIST controller 203 and include the CAS, RAS, and WE signals, for use in controlling DRAM operation within the MMU in the step mode. The step mode controller 204 also generates separate SM status commands for segments 0 and 1. The two sets of SM commands generated by the BIST controller 203 and the step mode controller 204 are fed to a 2:1 multiplexer 205 which allows selection of SM commands from either of these modules on the basis of the SM enabling signal relayed from the MMC to the MCD.

The SM commands selected by the MUX 205 are fed to another 2:1 multiplexer 206 which also accepts the command signals generated by DRAM controller 201 for segment 0 and permits selection of either of the input sets of commands on the basis of the SM enable command generated by the BIST controller 203 for segment 0. The output of multiplexer 206 represents the final RAS, CAS, and WE commands to be relayed to the MMU for controlling the operation of the DRAMS based in segment 0 of the MMU.

Similarly, SM commands from the MUX 205 are fed to a 2:1 MUX 207 for segment 1 which also accepts the command signals generated by the corresponding DRAM controller 202 and allows selection of either of the two input sets of commands on the basis of the SM enable command generated by the BIST controller 203 for segment 1. The output of MUX 207 represents the RAS, CAS, and WE signals to be relayed to the MMU for controlling operation of the DRAMs located in segment 1 of the MMU.

The above arrangement permits control of each of the two DRAM-based memory segments comprising the MMU on the basis of the DRAM controllers 201 and 202 disposed within the MCD during normal memory operation while permitting MCD-independent DRAM control during step mode operation. In addition, the arrangement allows DRAM control signals during step mode operation to be originated from either the step mode controller 204 or the BIST controller 203.

The DRAM controllers 201 and 202 are preferably in the form of state machines which sequence the DRAM control signals, i.e., the RAS, CAS, and WE signals, on the basis of predefined input cycle commands. The DRAM controllers are also preferably of the programmable type so that they are capable of controlling the timing of the DRAM control signals according to a predetermined correspondence with the particular frequency being used for the memory system clock. It should be noted that the two segments within an MMU that are controlled by the MCD 72 are linked through a common data path (as apparent from the interleaving arrangement of FIG. 2A). Accordingly, arbitration or prioritizing logic 208 is associated with the DRAM controllers for allowing utilization of the common data path in a non-conflicting manner.

Each of the DRAM controllers 201 and 202 also generates a status signal indicative of normal memory operation of the controller for the corresponding memory segment. These signals are multiplexed with the self-test status signals for the MCD in corresponding 2:1 multiplexers 209 and 210, respectively, on the basis of the SM enable signal generated by the BIST controller 203. The status signals generated by the DRAM controllers are relayed to the MMC during normal memory operation; during self-test operation the self-test status signal generated by the BIST controller 203 is used.

In addition, each DRAM controller 201 and 202 generates a bypass select signal for use in executing the write-pass memory operation; this signal allows the memory write path to be regulated in such a way as to bypass the access path to the DRAMs so that data being written to memory may be read directly from the write buffers without having to access the DRAMs a second time to read the same data. As noted above, the bypass select signal is relayed to the MMU and causes data that has just been written to DRAMs within a selected segment and residing in the corresponding write buffer to be latched into the corresponding read buffer for being read out instantaneously without going through a DRAM-access operation.

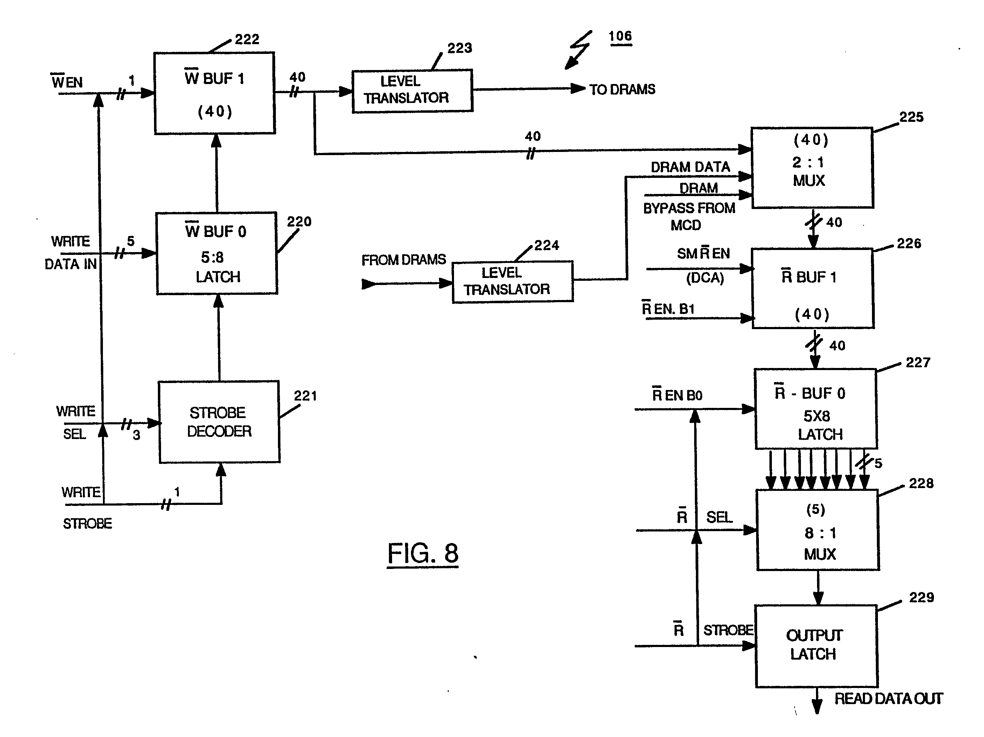

In response to receipt of the segment cycle commands, the DRAM controllers 201 and 202 generate a control signal for causing the latching of data from the DRAMS into the corresponding input read buffer to initiate a data read sequence as described above with respect to FIG. 8.

Referring now to FIG. 8, there is shown a more detailed illustration of a preferred modular configuration for the DDP module 106 of FIG. 6. As shown in FIG. 8, write data entering the DDP module 106 is latched into a first write buffer 220 on the basis of a write select signal generated within the MMU. Data being written are preferably clocked in 5 bits at a time and the write select signal is preferably in the form of a 3-bit signal which is strobed into a decoder unit 221 on the basis of a write strobe signal also generated within the MMU module. The preferred width of the data path in terms of the number of bits is indicated at various places where the data lines are intersected by a double-slash (//) symbol.

In order to accommodate incoming 5-bit groups of data, the write buffer 220 is provided with a plurality of 5-bit latches. Preferably, eight sets of latches are provided so that up to 40 bits of data may be latched into the read buffer 220. Each incoming 5-bit group of data is latched into a selected set of latches on the basis of a load enable signal which is provided by the decoder unit 221 in response to the write select signal being clocked into the decoder unit by the write strobe signal.

The 40 bits of data stored within the first write buffer 220 are subsequently latched into a second write buffer 222 on the basis of a write enable signal generated within the MMU and provided to the buffer 222 in conjunction with the write strobe signal. Write data from buffer 222 are then transferred in a parallel manner after appropriate level translation (typically between the TTL logic used for the DRAMS to the ECL logic used generally through the memory system modules) by a level translator unit 223 onto the DRAMs located in the corresponding memory segment.

Considering the read data path, data from addressed DRAMs are first translated to compatible logic levels by means of a level translator unit 224 and is fed to a 2:1 multiplexer 225 which also receives the 40-bit write data generated by the write buffer 222 prior to storage in memory. The multiplexer 225 is indexed by the DRAM bypass signal generated by the MCD module (see FIG. 7) and when the bypass signal is found to be asserted, the write data put out by write buffer 222 are transferred onto a first read buffer 226 for being relayed out to the SCU. On the other hand, if the DRAM bypass signal is not asserted, the multiplexer 225 transfers the 40-bit data read from the DRAMs to the first read buffer 226 on the basis of either the step mode read enable signal generated by the DCA module when the memory system is being operated under the step mode of operation, or the read enable signal for buffer 226 generated by the MCD (see FIG. 7, blocks 206, 207) module during normal memory operation.

Subsequently, data from read buffer 226 are transferred as a 40-bit data stream into a second read buffer 227 on the basis of a write enable signal for the buffer. Read buffer 227 is similar to the first write buffer 220 and includes a plurality of sets of latches. Each set of latches is capable of storing 5 bits of data on the basis of the read enable signal for the buffer in conjunction with a read select signal generated by the MMU. The 40 bits of latched data from buffer 227 are transferred in 5-bit data blocks to a 5-bit 8:1 multiplexer 228 from where data are transferred to a 5-bit output latch for eventually being transmitted to the SCU as read data on the basis of a read strobe signal relayed through the MMU. The read strobe signal is preferably a buffered clock signal which can conveniently be extracted from the programmable clock provided on the SCU (see FIG. 2).

The read strobe signal also clocks the read select signal into the multiplexer 228 for identifying the particular 5-bit set of latched data that is to be transferred first to the SCU through the output latch 229; the read select signal accordingly serves to control the manner in which data are "wrapped" out to the SCU on the basis of the first quad-word requested by the system unit originating the memory command.

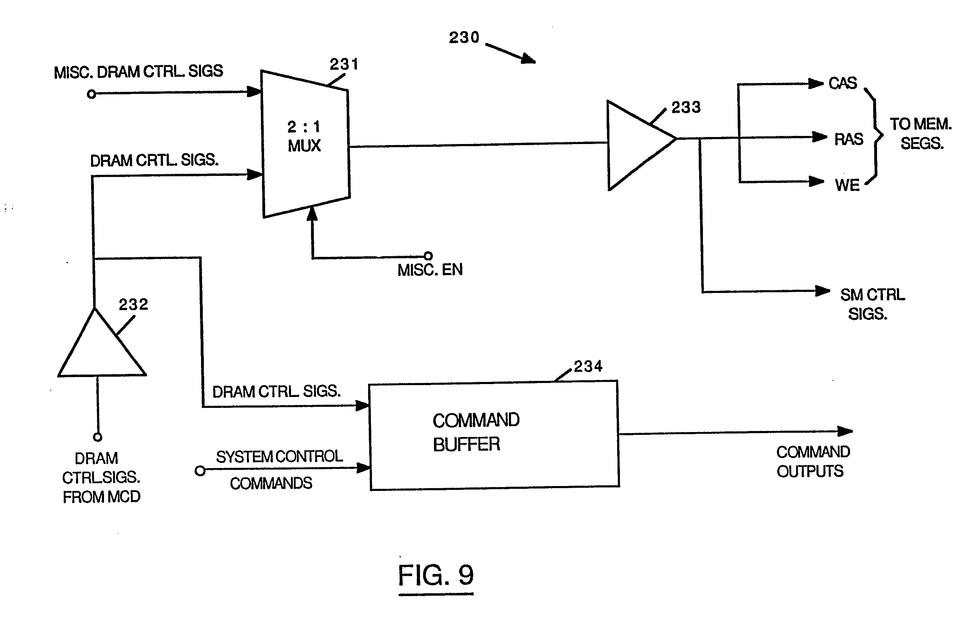

Turning now to FIG. 9, there is shown a schematic diagram illustrating the control signal path, generally designated 230, in the DCA module (116 in FIGS. 5 and 6B) for use in the memory modules (100 in FIG. 5) of the MMU (36 in FIG. 2). The DCA module essentially functions as a means for buffering control signals for the DRAM-based memory segments and the generation of corresponding command signals for operation of the various modules comprising a given MMU unit. More specifically, the DCA includes a 2:1 multiplexer 231 for accepting all DRAM-control signals generated by the MCD module within the ACU (as has been described above in detail). In addition, the multiplexer 231 also receives non-MMC control signals such as those generated by the step mode controller 204 and the BIST controller 203 in FIG. 7. The DRAM control signals from the MCD are fed to the MUX 231 after being translated to a suitable logic level by level translator means 232.

An enable signal which is asserted during step mode operation or self-test operation is fed to MUX 231 and serves as a basis for enabling the non-MCD DRAM control signals when the memory subsystem is being operated outside the normal mode of operation. These signals are then passed through suitable level translation means 233 and are available for being applied to corresponding memory segments. During the normal mode of operation the multiplexer 231 selects the DRAM control signals generated by the MCD as its output and these signals are subsequently level translated and are available for being applied to the DRAMs located in corresponding memory segments.

The DCA module is adapted to receive the MCD DRAM control signals, after level translation, at a command buffer 234 which also accepts other system control commands including commands for enabling the step control MUX 231, for enabling the data transfer latches during step mode operation, and for receiving refresh flags indicating the need for refresh operations to be performed on the DRAMs. The command buffer 234 is adapted to generate corresponding command outputs in response to receiving the MCD and the system control commands on the basis of predefined command outputs stored inside the command buffer 234 in correspondence with selected input commands. The command outputs generated by the command buffer 234 include signals indicative of the standby mode of operation, of the fact that a given module in the MMU is busy at a given part of the memory cycle, and of the enabling of the self-test mode of operation for the memory sub-system.

Referring now to FIG. 10, there is shown a conventional arrangement 240 for error checking of control signals or other data relayed between a transmitter module 241 and a receiver module 242. According to such an arrangement, data that are to be relayed is stored within a latch 243 and latched out on the basis of a system clock (represented as the A clock). The data are subsequently processed by a parity generator 244 such as a conventional parity tree generating a parity bit on the basis of the signal bits that are input to it. The parity bit is combined with the data bits and relayed through a connector 245 to means physically linking the transmitter module 241 to the receiver module 242. The linking means is typically a data transmission cable 246 which is linked to the receiver module 242 through a connector 245A.

Data that are received at the receiver end are latched into a latch 247 on the basis of a clock signal (represented here as the B clock) which is typically different from the A clock. In the multiprocessing system described above, the transmitter module would form part of the MMC module and the receiver module would be located within the MCD module; the data that is put out by the latch 247 represents the control signals that are to be applied to the DRAMs. As shown in FIG. 10, it is conventional to latch the received data bytes into a parity generator 248 which processes the input bits to produce a single parity bit. The receiver parity bit is subsequently compared with the parity bit received along with the control signals from the transmitter module at an error check module 249. The module 249 is enabled by the system clock (the A clock) in order to insure that the error sampling is synchronized to the parity being generated at the transmitter end. If the two parity signals that are compared are not found to be equal, a parity error signal is generated and relayed back to the transmitter module.

In such conventional systems, the transmission of data is initiated by the A clock and it is guaranteed that the data will be valid when captured at the receiver end on transitions of the B clock. The comparison of the received parity with the receiver-generated parity is performed at the subsequent occurrence of the A clock in order to guarantee that no data transitions occur in the meantime.

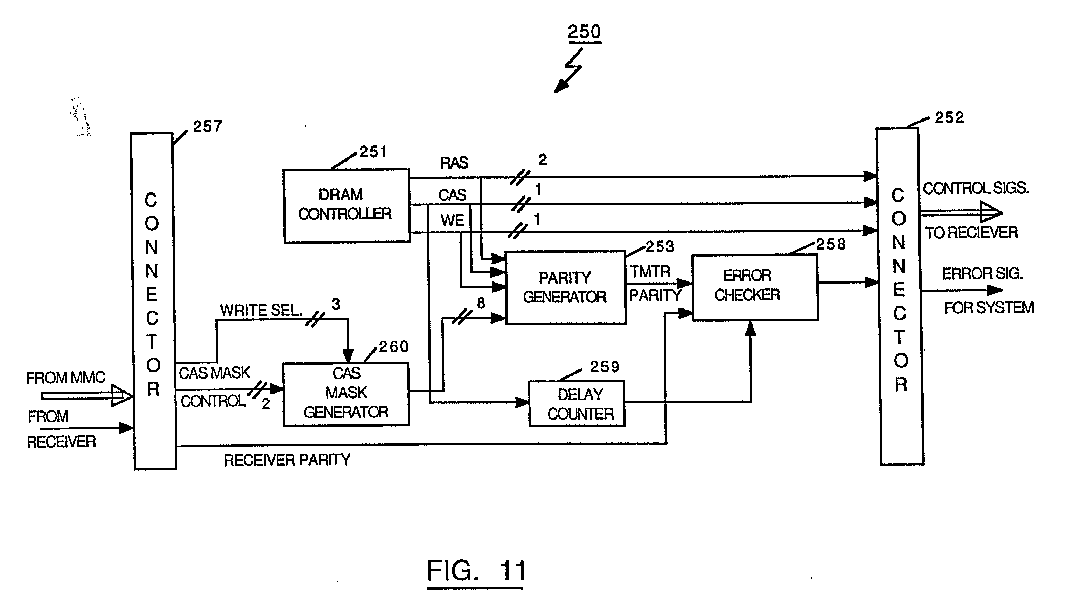

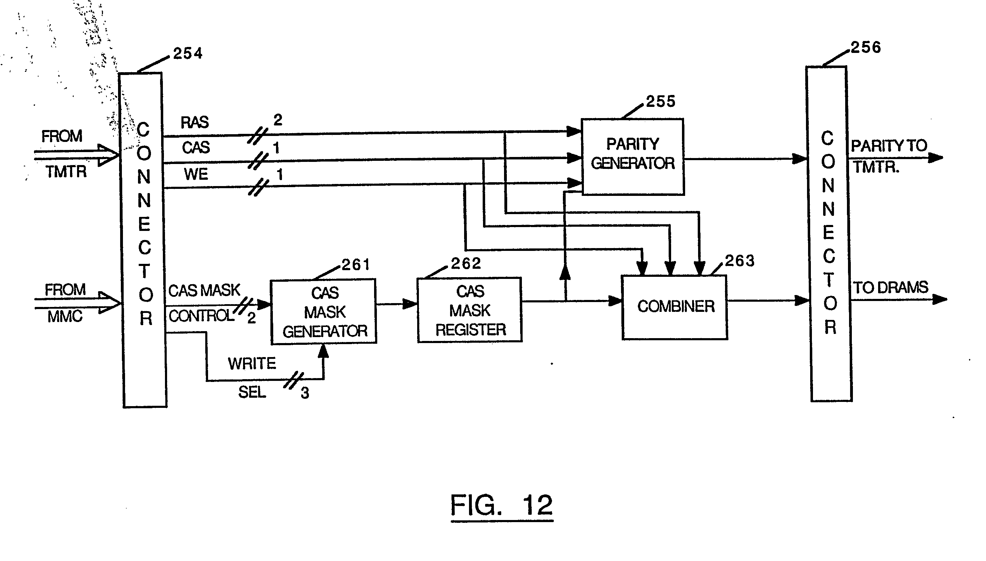

Referring now to FIGS. 11 and 12, there are shown block diagrams illustrating an arrangement for implementing the error checking scheme of the present invention for checking DRAM-control signals between transmitter and receiver modules. FIG. 11 is an illustration of a transmitter module 250 which includes a DRAM controller 251 for generating the pertinent DRAM-control signals. In their most common form, the control signals are:

    (1) a two-byte Row Address Strobe (RAS) signal,

    (2) a single-byte Column Address Strobe (CAS) signal, and

    (3) a single-byte Write Enable (WE) signal.

These control signals are relayed out of the transmitter module through a connector 252 over a physical linking means, such as a stretch of data transmission cable, to the receiver module shown in FIG. 12.

The transmitter module includes a parity generator 253 for processing the control signals put out by the DRAM controller 251 in order to generate a single-bit transmitter parity signal. At the receiver end (FIG. 12), the control signals from the transmitter are accepted from the physical linking means through an input connector 254 and are subsequently processed by a parity generator 255 in order to produce a single-bit receiver parity signal. The receiver parity is subsequently relayed out through an output connector 256 back to the transmitter module through the same physical linking means provided between the transmitter and receiver modules. The receiver parity is accepted through an input connector 257 at the transmitter module and is subsequently fed along with the transmitter-generator parity to an error checker module 258. The error checker essentially compares the two parity signals and is preferably enabled by one of the control signals generated by the DRAM controller 251 after it has been appropriately delayed through delay counter means 259. Any difference between the transmitter-generated parity and the receiver-generated parity serves as an indication that the controlled signals have undergone erroneous transfer between the transmitter and receiver module and is used to generate an error signal for the computing system.

The above arrangement results in a continuous sampling of data representing the control signals at the receiver end and does not require a system clock within the receiver module in order to synchronize the sampling time for the parity signals to corresponding control signals. It is, however, essential that the delay counter means 259 function in such a way as to sufficiently delay the sampling points utilized by the error checking means 258 to accommodate the time required for the control signals to traverse the interconnection between the transmitter and receiver modules as well as the time required for the receiver-generated parity signal to traverse the interconnection and be relayed back from the receiver module to the transmitter module. In addition, the period of delay provided by the delay counter 259 must account for any clock skews resulting from signal transmission through the various logic levels in the transmitter and receiver modules.

Since error sampling is based upon one of the DRAM-control signals, there is no need for an additional clock system at the receiver end to insure that error sampling occurs when the signals fed to the error checker 258 are both valid and corresponding to the same set of control signals. Accordingly, a major advantage with this type of error checking scheme is that it is adapted for use with systems where a system clock is not available on the receiver module. In addition, because the error signal is generated at the transmitter module itself, there is no need for provision of a dedicated signal line for relaying the detected parity error signal from the receiver module to the transmitter module.

The error checking scheme discussed above is particularly adapted for use with the multi-processing system described above with reference to FIGS. 1-9. In applying this scheme to the multi-processing system the transmitter module of FIG. 11 forms part of the MCD module illustrated in detail at FIG. 7 which shows the provision of DRAM controllers 201 and 202 for generation of DRAM-control signals respectively for segments 0 and 1 of the MMU. In such an application, certain additional control signals are also provided in order to facilitate write operations to selected portions of an addressed block of DRAMs within the MMU, and their integration into the overall error checking scheme of this invention will be described below in detail.

A multi-processing system of the type described above typically operates on a cache memory which is accessed in 64-byte cache blocks. In other words, all memory requests are in terms of 64-byte blocks which need to be transferred to or from a designated MMU. This arrangement is convenient for read operations where a 64-byte block of memory may be retrieved even though only some smaller portion of the block is actually required to be read. However, in the case of write operations where less than the full 64-byte block of memory is designated as being the source of write data, it becomes necessary to identify the specific long- words (4-byte words) which need to be written to. In order to accomplish this, the standard 64-byte memory address is subdivided into a series of long-words each having a valid bit associated with it, the condition of which (asserted or negated) determines whether or not the corresponding long-word is to be written. Each valid bit is tied to the CAS signal in such a way that the CAS signal goes low when the bit is valid and does not undergo any transition when the bit is not valid.

A 64-byte address is accordingly split up into eight quad-words (8-byte words) each of which comprises a pair of long-words (and associated valid bytes) corresponding respectively to the pair of MDP modules (MDP-0 and MDP-1) which in turn correspond to the plurality of memory modules on a MMU. In order to specify the particular long-words of a memory address that need to be written to, the MMC module provides a mask which specifies the status of the valid bytes accompanying the addressed long-words. Once data are ready to be transferred to memory, the MMU receives pairs of long-words with each quad-word transfer which are split between the MDP modules for the memory modules. Eight separate transfers are accordingly required for transfer of all the addressed 64-byte block of memory. Since two valid bits are associated with each transfer, 16 valid bits are associated with the 64-byte addressed block of memory. Sixteen separate CAS control lines would normally be needed at the DCA module in order to completely specify a write operation for a single memory segment; 32 CAS lines would thus be required for adequately addressing the two DCA modules for both memory segments. The identification of selected long-words of the 64-byte block of addressed memory data is performed by the write select (WS) signal generated by the MMC module. The (WS) signal is preferably a 3-bit signal which accompanies each data transfer to the MMU and for each data transfers identifies a particular long-word which may or may not be written to.

Accordingly to a preferred embodiment, the specification of whether a particular long-word identified by the corresponding WS signal is in fact written to is performed conveniently by a CAS mask control signal which is relayed from the MMC. This signal is preferably in the form of a two-bit signal specifying the status of the long-word of memory associated with each of the eight transfers. The above operation is performed in the transmitter module of FIG. 11 by means of CAS mask generator 258 which is adapted to receive the 3-bit WS signal and the 2-bit CAS mask control signal in order to generate a bit-mask which represents the 8-bits corresponding to the data transfers with each bit being asserted or negated on the basis of the corresponding CAS mask control signal. The output of the CAS mask generator 259 is hence an 8-bit signal and is subsequently fed to the parity generator 253 so that the transmitter parity is calculated as a combination of the DRAM-control signals and the CAS mask bits.

On a similar basis, the receiver module is provided with a CAS mask generator 261 which is also adapted to receive the CAS mask control signal and the WS signal from the MMC module in order to generate an 8-bit mask on a basis identical to that used on the transmitter module. The 8-bit mask at the receiver end is stored within a CAS mask register 262 from where the 8-bits are subsequently processed by a combiner 263 in conjunction with the DRAM-control signals prior to being relayed through the connector 256 to the corresponding segment of DRAMs. The 2-bit nature of the CAS mask control signal permits the CAS mask register bits to be manipulated in one of four different ways. The control signal may specify:

(1) the particular bit corresponding to the long-word selected by the WS signal as being set so that the long-word is written to,

(2) the bit corresponding to the long-word specified by the write select signal as being cleared so that the long-word is not written to,

(3) specify all bits within the CAS mask register as being set, so as to in turn specify all long-words associated with the data transfers as being written to, or

(4) specify all bits within the CAS mask register as being cleared, so as to in turn specify that none of the long-words associated with the data transfers are to be written to.

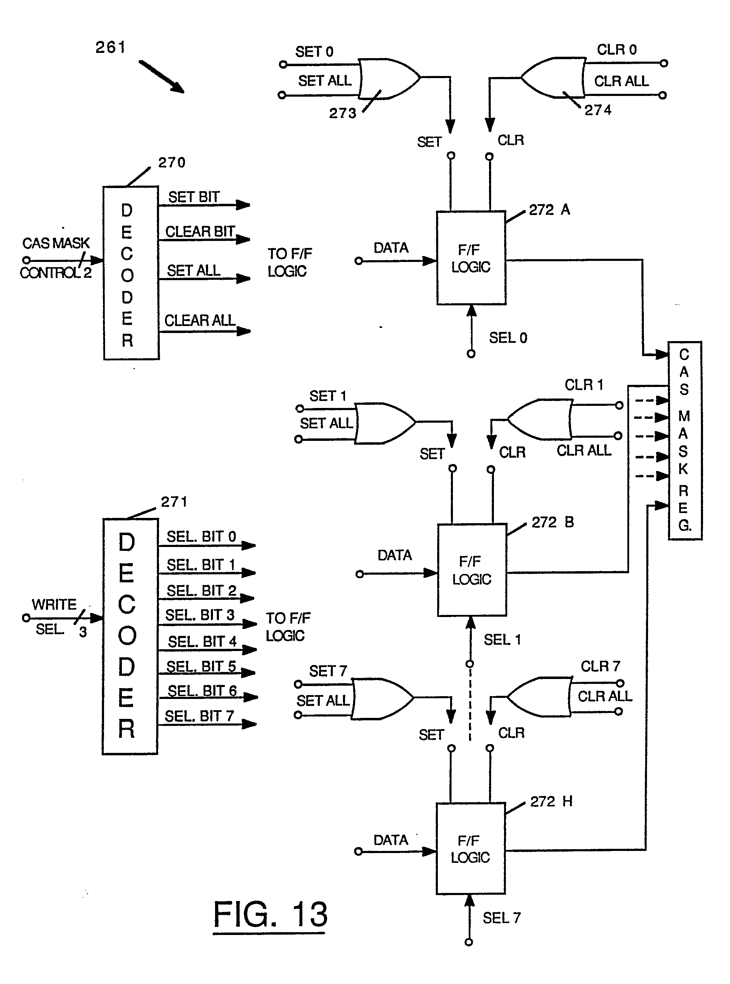

Referring now to FIG. 13, there is shown a preferred arrangement for implementing the operation of a CAS mask generator 261 and CAS mask register 262 for use with the receiver module shown in FIG. 12. Moreover, the CAS mask generator 261 is similar to the CAS mask generator 260 of FIG 11.

As shown in FIG. 13, a decoder 270 is provided for accepting the two-bit CAS mask control signal received from the MMC module. The decoder essentially performs a two-to-four decode operation upon each two-bit signal received with each data transfer in order to specify whether the corresponding bit representing the write status of the corresponding long-word is to be set or cleared. More specifically, the decoder 270 decodes the CAS mask control signal into one of four signals:

(1) a "set bit" signal specifying the corresponding CAS mask bit as being set to a value equal to 1;

(2) a "clear bit" signal specifying the corresponding CAS mask bit as being set to a value equal to 0;

(3) a "set all" signal specifying all the CAS mask bits as being set to a value equal to 1; and

(4) a "clear all" signal specifying all the CAS mask bits as being set to a value equal to 0.

On a similar basis, a decoder 271 is provided for accepting the 3-byte write select signal and decoding it into one of eight signals specifying the particular bit in the CAS mask register that is to be subjected to the bit operation specified by the corresponding CAS mask control signal.

A plurality of flip-flop (F/F) units 272 are provided along with associated logic for the purpose of generating the CAS mask bits on the basis of the signals produced by the decoders 270 and 271. A single F/F unit is provided for generating each CAS mask bit. For instance, F/F unit 272A is provided for generating bit 0 of the CAS mask and has its "set" input activated by the output signal generated by an OR gate 273 which accepts as its input the "set bit" signal corresponding to bit 0 and the "set all" signal. The "clear" input for the F/F unit is activated by the output of a second OR gate 274 which accepts as its input the "clear bit" signal corresponding to bit 0 and the "clear all" signal generated by decoder 270. The "select" input for the F/F unit is activated by the "select bit" signal corresponding to bit 0 generated by the decoder 271. This arrangement insures that bit 0 of the CAS mask is selected on the basis of the WS signal received from the MMC and set or cleared on the basis of the CAS mask control signal also received from the MMC. The bit so generated from the F/F unit 272A is stored as bit 0 within the CAS mask register 262. Similar logic arrangements are provided for each of the remaining seven bits constituting the CAS mask and the output bits of the respective F/F units are eventually stored in the CAS mask register 262 as the corresponding data transfers occur from the MMC to the MMU. After all data transfers corresponding to the 64-byte addressed memory block have occurred, the 8-bit CAS mask stored in the CAS mask register 262 is available for being relayed to the corresponding segment of DRAMs.

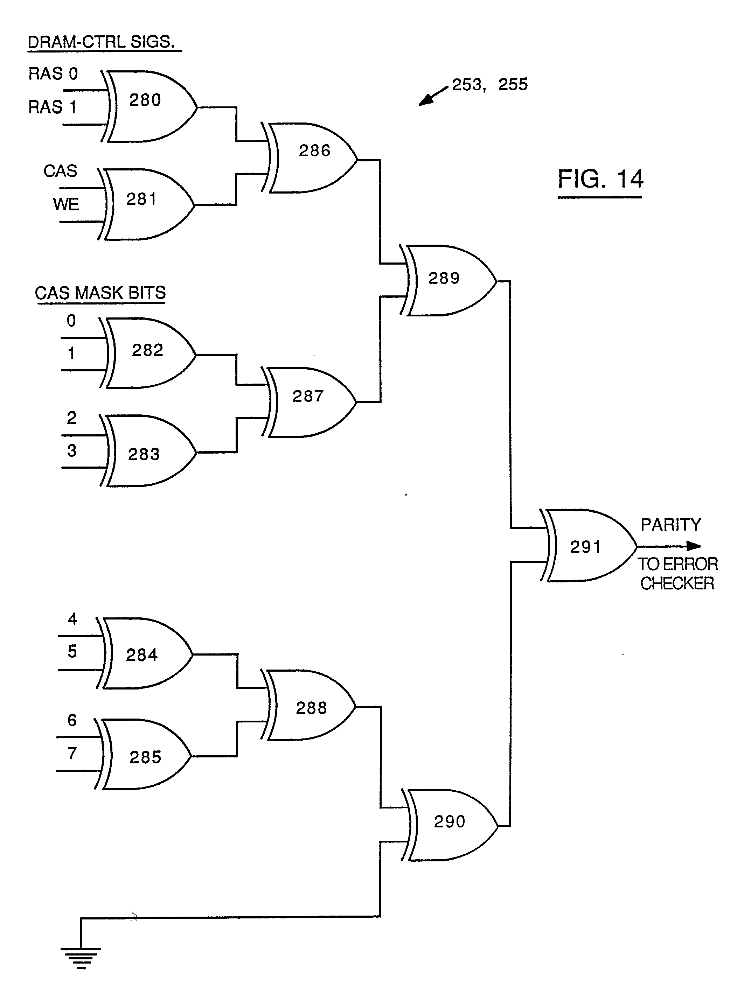

Referring now to FIG. 14, there is shown a preferred logic implementation for the parity generator means 253, 255 of FIGS. 11 and 12. The parity generation arrangement is an exclusive-or (X-OR) parity tree adapted to process input signals through a multilevel array of X-OR gates in order to generate a single parity bit. More specifically, the two bits of the RAS signal are fed as inputs to X-OR gate 280 and the bit signals corresponding respectively to the CAS and WE signals are fed as inputs to another X-OR gate 281. Each of the bits comprising the CAS mask are fed as separate inputs respectively to X-OR gates 282-285. In particular, CAS mask bits 0 and 1 are fed as inputs to gate 282, CAS mask bits 2 and 3 are fed as inputs to gate 283, bits 4 and 5 are fed as inputs to gate 284. and finally, bits 6 and 7 of the CAS mask are fed as inputs to gate 285. The outputs generated by the first level of X-OR gates 280-285 are successively processed by a second level of X-OR gates comprising gates 286, 287, and gate 288, and a third level comprising gates 289-290, and ultimately through X-OR gate 291, the output of which represents the final parity bit that is used for comparison of parity signals generated by the transmitter and the receiver modules.

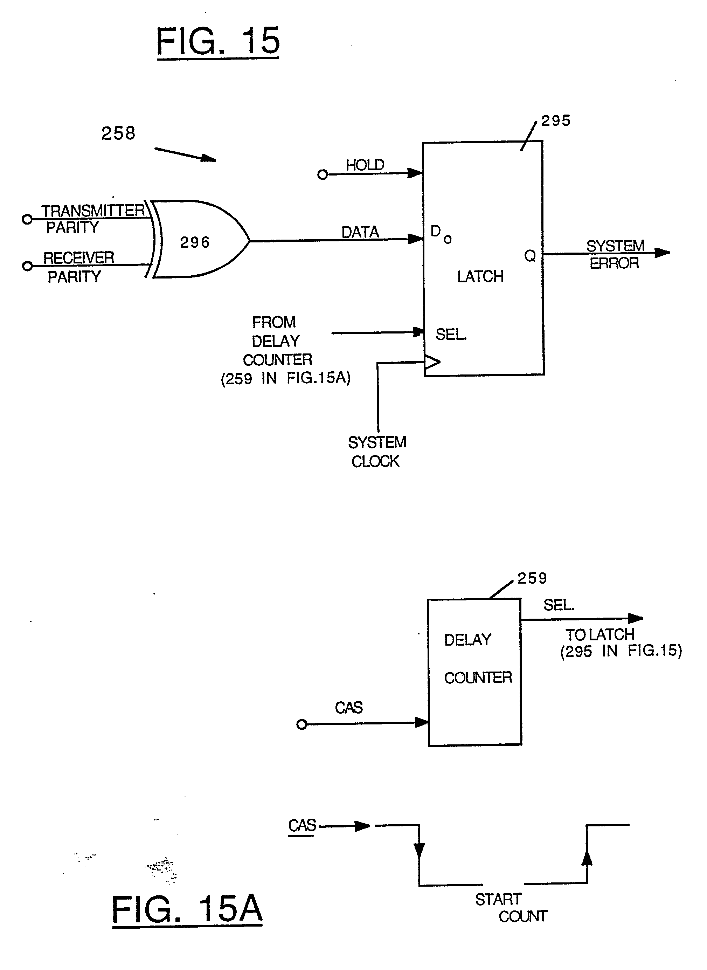

Referring now to FIG. 15, there is shown a block diagram illustrating the error checker 258 of FIG. 11. The error checker essentially comprises a multiple-input scan latch 295 based on an appropriate flip-flop arrangement such as the D-type flip-flop shown in FIG. 15. The "data" input to the latch is provided with the output of an X-OR gate 296 which receives as its inputs the signals representing the transmitter parity and the receiver parity. A "hold" input for the latch serves as a two-state line identifying whether or not the error checking process should take place. The sampling period is determined by a clock signal feeding the "clock" input of the latch 275.

The output of latch 295 corresponds directly to the data at the input of the latch and accordingly goes high any time the compared parity signals are unequal, thereby indicating the existence of an error. The hold input changes state on the subsequent clock transition in the presence of an error; otherwise, the no-error state is retained. A "select" signal fed to the scan latch 295 identifies the precise time at which the error sampling occurs and is tied to the CAS signal through a delay/counter unit 297 (FIG. 15A) which is adapted to be activated by any transition in the CAS signal and in response thereto activate the "select" signal after a predetermined period of delay in terms of system clock cycles. Accordingly, the above arrangement insures that the signals representing the transmitter parity and the receiver parity are compared, i.e., the parity check performed, precisely after the predetermined delay period pursuant to transition of the CAS signal. The significance of the delay period in insuring integrity of the parity checking process will be discussed below.

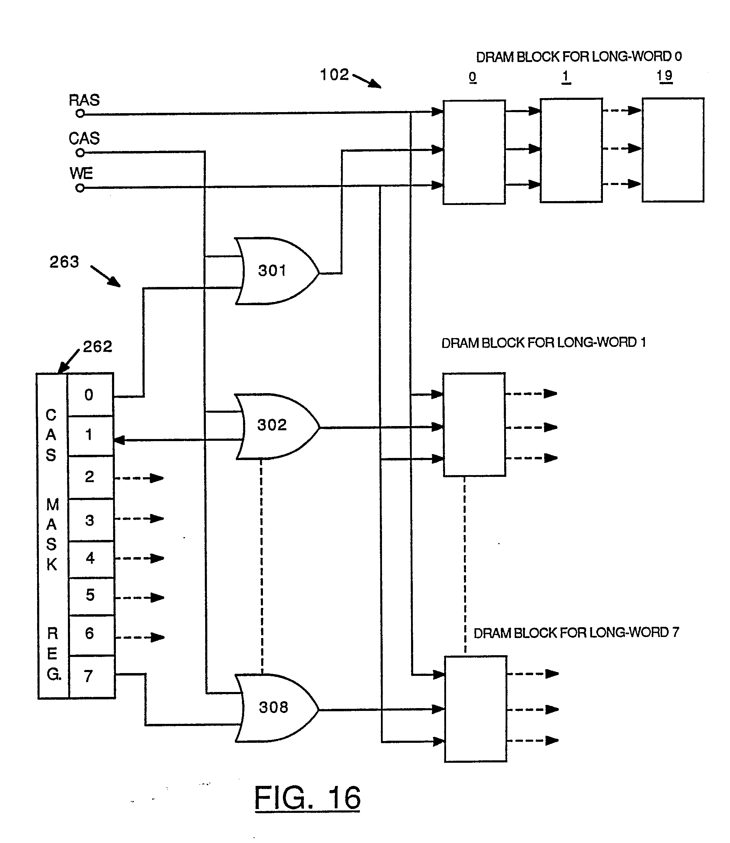

Referring now to FIG. 16, there is shown a simplified diagram illustrating the preferred logic implementation for the combiner unit 263 in the receiver module of FIG. 12. As described above, the essential function of the combiner unit is to process the DRAM-control signals on the basis of the CAS mask bits generated in correspondence with each long-word of memory associated with the data transfers occurring between the MMC and the MMU. A single quad-word referenced by each of the eight data transfers designates two separate long-words each of which in turn corresponds to a block of 20 DRAMs located in the corresponding memory module. Accordingly, each bit in the CAS mask ultimately represents the status of the corresponding block of 20 DRAMs and needs to be applied to each of these DRAMs in combination with the DRAM-control signals. The 1-bit WE signal is applied directly to the block of DRAMs and signifies, independent of the CAS mask, whether the DRAMs are being read from or written to. The 2-bit RAS signal is similarly applied directly to the block of DRAMs and generally initiates the internal memory cycles of the DRAMs, initiates the internal DRAM controller for DRAM timing, and strobes in the designated row addresses; these operations are performed by the RAS signal independent of the CAS mask bits.

The CAS signal, however, is applied to the DRAM blocks in conjunction with the CAS mask bits because it is used as a basis for identifying the particular block of DRAMs which represent the particular long-word that is identified as being written. In addition, the CAS signal performs the standard DRAM-control operation of strobing in the corresponding column addresses. As shown in FIG. 16, the WE and RAS signals are applied directly to each of the DRAM blocks corresponding to the data transfers. The CAS signal is fed as an input to an OR gate 301 which also receives bit 0 in the CAS mask from register 262 and the output of gate 301 is fed as the final CAS signal applied to the block of DRAMs corresponding to the first data transfer. Accordingly, the final CAS signal is asserted or not asserted on the basis of the status of the corresponding bit within the CAS mask. On a similar basis, each of the remaining bits of the CAS mask are fed as inputs to corresponding OR gates 302-308 in combination with the CAS signal in order to generate the final CAS signal applied to the corresponding block of DRAMs.

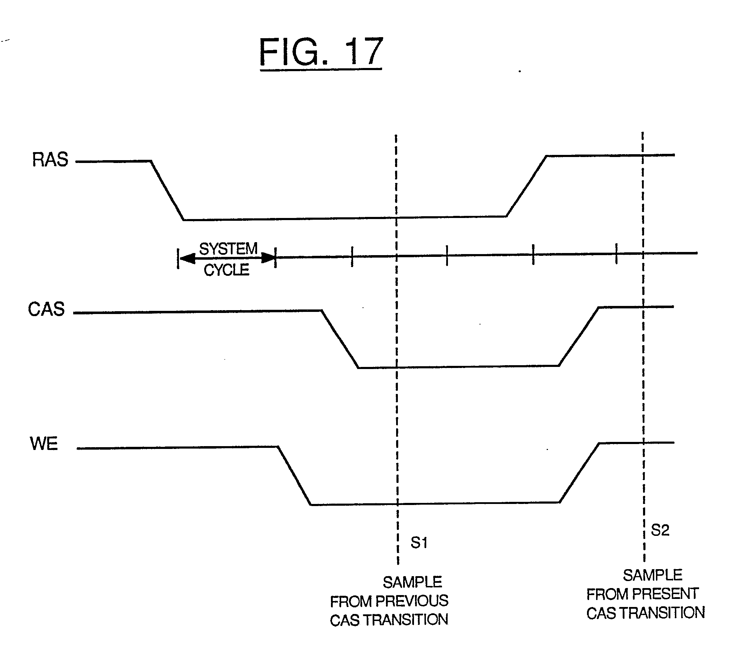

Referring now to FIG. 17, there is shown a timing diagram representing relative transitions of the DRAM-control signals typically used for controlling the operation of DRAM-based memory units. As shown therein, the RAS signal is the first one to make a transition and is asserted or not asserted depending on whether the memory cycle is specified to be write or read, respectively. The CAS signal makes the transition two system cycles after a RAS transition while the WE signal changes state before a CAS transition. Accordingly, the appropriate time for error sampling is at some point after a CAS transition when the other DRAM-control signals have also transitioned into the cycle. It is also important that the time elapsed between a CAS transition and the subsequent error sampling be sufficient to allow control signals from the transmitter module to be relayed to the receiver module and the receiver parity to be relayed from the receiver module to the transmitter module in order to insure that error sampling is performed on corresponding parity signals. In addition, the internal clock skew involved in transmission of the controlled signals through the logic located within the modules themselves is taken into consideration.

It is preferable that the delay period be specified to be at least three system cycles after a CAS transition in order to account for the roughly two system cycles of time required at a maximum for control signals to traverse, in both directions, the path between the transmitter and the receiver modules across the stretch of data transmission cable linking the two modules, and the maximum period of roughly a single system cycle required to account for internal clock skews. Accordingly, the checking of the transmitter parity against the receiver parity (see sample point 52 in FIG. 17) is performed at a point in time which is delayed by a period of three system cycles each time a CAS transition occurs. More specifically, the delay counter 259 of FIG. 15A is set to activate the select signal precisely three system cycles after the CAS signal at its input undergoes a transition.

It will be apparent from the foregoing that the error checking scheme of this invention provides a simple and efficient means for error checking of DRAM-control signals transmitted between system modules which are separated by a physical interconnect such as a data transmission cable. As compared to conventional schemes wherein parity checking is performed at the receiver end, the present scheme performs the parity check at the transmitter end and requires only a single additional signal line for indication of parity error. Because the receiver parity is generated and transmitted back to the transmitter module as soon as the corresponding control signals are received, there is no need for the receiver end to contain a latch or like means as well as the control circuitry required to enable the storage means for storing transmitter-generated parity. The present error-checking scheme dispenses with the need for the provision of a system clock signal at the receiver end in order to synchronize the generation and checking of parity signals with corresponding control signals.

It will also be apparent to those skilled in the art that this error-checking scheme provides improved dynamic operation because the presence of errors is monitored at the transmitter end itself and accordingly permits detection of "stuck-at" conditions on the parity line from the control receiver to the control transmitter. Such "stuck-at" conditions cannot be detected using conventional approaches where the control receiver generates a signal for the transmitter only when an error is detected at that end. The present invention is also adapted to be used for error checking of DRAM-control signals which are transmitted between system modules over a wide range of cable lengths and block frequencies, the error sampling procedure accounts for the transmission delay involved in relaying control signals and parity signals between the system modules as well as the clock skews inherent to the modules.

## Claims

1. An error checking method for detecting errors in data transmitted between a transmitter (24) and a receiver (242), the method comprising:
generating a parity signal for the data at the transmitter;
transmitting the data from the transmitter to the receiver;
generating a parity signal for the received data at the receiver module;
transmitting the receiver-generated parity signal from the receiver to the transmitter; and
comparing, at the transmitter, the receiver generated parity signal with the transmitter-generated parity signal to generate an error signal when the parity signals are found to be unequal.

2. A method as claimed in claim 1, wherein the data includes control signals transmitted from the transmitter to the receiver, and wherein the comparison of the parity signals is performed after a delay of a predetermined period subsequent to a transition in a selected one of the control signals.

3. A method as claimed in claim 2, wherein the control signals control access to dynamic random access memories (DRAMS).

4. A method as claimed in claim 2 or 3, wherein the control signals are transmitted from the transmitter to the receiver over data transmission cable (246), and the predetermined period is greater than the sum of the period required for control signals to be transmitted from the transmitter to the receiver and the period required for the receiver-generated parity signal to be transmitted from the receiver to the transmitter.

5. A method as claimed in claim 4 or 5, wherein the transmission of the data is synchronized to a system clock.

6. A method as claimed in claim 5, wherein the control signals include a row address strobe (RAS) signal, a column address strobe (CAS) signal and a write enable (WE) signal, the delay corresponding to a number of cycles of the system clock subsequent to a transition in a selected one of the RAS and CAS signals.

7. A method as claimed in claim 6, wherein the selected one of the RAS and CAS signals is the CAS signal.

8. A method as claimed in claim 5, 6 or 7, wherein the period is three cycles of the clock.

9. A data transmission system comprising transmitter means, receiver means, and a data link connecting the transmitter means and the receiver means for the transmission of data between the transmitter means and the receiver means, the transmitter means including means for transmitting the data over the data link to the receiver means and a parity generator (253) for determining the parity of data transmitted by the transmitter means to the receiver means, and the receiver means including means for receiving data from the data link and a parity generator (255) for determining the parity of the data received from the data link, characterised in that
the receiver means include means for transmitting a parity signal to the transmitter means, the parity signal indicating the parity determined by the parity generator included in the receiver means, and
the transmitter means include means for receiving the parity signal transmitted by the receiver means, and means (258) for comparing the parity indicated by the parity signal to the parity determined by the parity generator in the transmitter means and indicating an error when the parity indicated by the parity signal is not the same as the parity determined by the parity generator in the transmitter means.

10. A system as claimed in claim 9, wherein the data includes a control signal, and wherein the means for comparing include means (295) for enabling the comparing of the parity of previously transmitted data after a delay of a predetermined period subsequent to a transition in the control signal.

11. A system as claimed in claim 10, wherein the data link includes a plurality of parallel data lines including lines for conveying the control signals.

12. A system as claimed in claim 10 or 11, wherein the delay is greater than the sum of the period of time required for the control signals to be transmitted from the transmitter means to the receiver means and the period of time required for the receiver-generated parity signal to be transmitted from the receiver means to the transmitter means.

13. A system as claimed in claim 10, 11 or 12, wherein the means for transmitting in the transmitter means are synchronized to a system clock, and the delay is at least the period of three cycles of the system clock.

14. A system as claimed in any of claims 9 to 13, wherein the data includes control signals for controlling access to a dynamic random access memory (DRAM).

15. A system as claimed in claim 14, wherein the control signals include a row address strobe (RAS) signal, a column address strobe (CAS) signal, and a write enable (WE) signal.

16. A system as claimed in claim 16, wherein the selected one of the control signals is the column address strobe (CAS) signal.

17. A system as claimed in claim 15 or 16, wherein the means for comparing include means (259) for enabling the comparison of previously transmitted data after a delay of a predetermined period subsequent to a transition in a selected one of the control signals.

FIG. 1

FIG. 2

EP 0 382 390 A2

FIG. 2A

FIG. 3

EP 0 382 390 A2

FIG. 4A

MMC 70
DATA CTRL 77
ADD CTRL 78
DRAM CTRL 79
CMD/ST CTRL I/F 80
ERR. DET 82

FIG. 4B

MCD 72
DRAM CTRL TMG 84
MMC CMD 86
ERR DET 88
BIST CTLR 89

FIG. 4C

MDP 74,76
$\overline{W}$-DATA CHECK BITS 90
SBE DET/COR 92
DBE DET 94
BIT PATH GEN 96

FIG 5

FIG 6A

FIG 6B

EP 0 382 390 A2

FIG. 7

FIG. 8

FIG. 9

TO MEM. SEGS.

CAS
RAS
WE

SM CTRL SIGS.

COMMAND OUTPUTS

233

230

231

MISC. EN

2 : 1 MUX

234

COMMAND BUFFER

MISC. DRAM CTRL SIGS

DRAM CRTL SIGS.

DRAM CTRL SIGS.

SYSTEM CONTROL COMMANDS

232

DRAM CTRL SIGS. FROM MCD

FIG. 10

EP 0 382 390 A2

FIG. 11

FIG. 12

FIG. 13

EP 0 382 390 A2

FIG. 14

# FIG. 15

258

295

HOLD

296

TRANSMITTER
PARITY

RECEIVER
PARITY

DATA

$D_o$

LATCH

Q

SYSTEM
ERROR

FROM
DELAY
COUNTER
(259 IN FIG.15A)

SEL.

SYSTEM
CLOCK

259

DELAY

COUNTER

SEL.

TO LATCH
(295 IN FIG.15)

CAS

CAS

START
COUNT

# FIG. 15A

FIG. 16

# FIG. 17